# FASCICULE DE BREVET EUROPEEN

(11) **EP 1 636 010 B1**
(45) Date de publication et mention de la délivrance du brevet: **06.01.2010**
(21) Numéro de dépôt: 04767296.9
(22) Date de dépôt: 09.06.2004
(51) Int. Cl.: B29C 45/14, B60J 10/02, B29C 33/00

(54) **PROCEDE DE SURMOULAGE DE VITRAGES**
VERFAHREN ZUM UMGIESSEN EINER VERGLASUNG
METHOD FOR OVER-MOULDING A GLAZING

(30) Priorité: 10.06.2003 FR 0306958
(43) Date de publication de la demande: 22.03.2006
(73) Titulaire: SAINT-GOBAIN GLASS FRANCE, 92400 Courbevoie (FR)
(72) Inventeur: BORDEAUX, Frédéric, F-60200 Compiègne (FR); DEBAILLEUL, Romain, 60280 MARGNY LES COMPIEGNE (FR); DUCOURTHIAL, Elodie, F-60200 Compiègne (FR); LECLERCQ, Guy, F-60170 Cambronne Les Ribecourt (FR)
(74) Mandataire: Jamet, Vincent
(86) Numéro de dépôt international: PCT/FR2004/001430
(87) Numéro de publication internationale: WO 2004/110720

(56) Documents cités:
- EP-A- 0 354 481
- EP-A2- 0 845 340
- US-A- 4 584 155
- US-A- 4 688 752
- US-A- 6 045 891
- DATABASE WPI Section Ch, Week 199034 Derwent Publications Ltd., London, GB; Class A32, AN 1990-258330 XP002267900 -& JP 02 182424 A (ASAHI GLASS CO LTD) 17 juillet 1990 (1990-07-17)
- PATENT ABSTRACTS OF JAPAN vol. 014, no. 454 (M-1031), 28 septembre 1990 (1990-09-28) & JP 02 182424 A (ASAHI GLASS CO LTD), 17 juillet 1990 (1990-07-17)
- GALLAGHER: "Assess the Physical Requirements of Applications:" 2001, Extrait de l'Internet: URL:http://web.archive.org/web/20010304032 915/gallaghercorp.com/physi-4.shtml> [extrait le 2009-04-10]
- GALLAGHER: "REDUCING IMPACT SHOCK FORCE WITH URETHANE" Extrait de l'Internet: URL:http://www.gallaghercorp.com/urethane/ designguide/impact.shtml> [extrait le 2009-04-10]

## Description

La présente invention se rapporte à la technique de surmoulage de matière plastique sur un article tel qu'un vitrage notamment pour véhicule automobile.

Cette technique est appliquée généralement pour constituer des ensembles plurifonctionnels s'intégrant dans les carrosseries. Par surmoulage, on ajoute un ou plusieurs éléments fonctionnels, au moins sur une partie de la périphérie des vitrages, tels qu'un joint périphérique ou un élément de cadre pouvant le cas échéant avoir des éléments fonctionnels intégrés en inserts à la matière moulée ou un profil adapté pour coopérer avec d'autres éléments fonctionnels rapportés.

Ainsi, on connaît des pare-brise équipés de joint affleurant pouvant être mis en place à fleur de carrosserie, améliorant le coefficient de pénétration dans l'air du véhicule. On connaît aussi des hayons surmoulés sur une lunette arrière ou des montants de portière surmoulés sur un vitrage latéral.

Le verre trempé souvent requis dans la construction automobile pour sa contribution à la sécurité du véhicule se prête particulièrement bien à cette technique, mais il est aussi souhaitable de pouvoir appliquer cette technique à des verres ordinaires ou feuilletés.

D'une façon générale, on procède au surmoulage d'un objet quelconque en injectant de la matière plastique sur au moins une partie de sa périphérie après avoir pressé cet objet entre les deux plateaux d'un moule par des moyens de serrage appropriés, en faisant éventuellement le vide dans une zone centrale pour assurer le maintien de l'objet, la partie surmoulée étant limitée par des bossages rigides ou une suite de pavés métalliques prévus dans la structure du moule. Les procédés classiques d'injection mettent en oeuvre des pressions d'injection élevées, qui exigent une bonne résistance mécanique de l'objet à surmouler.

L'expérience a ainsi montré que la mise en oeuvre de cette technique, si elle est bien au point pour des produits présentant des propriétés mécaniques adaptées, pose un certain nombre de problèmes lors de son application à des produits particulièrement fragiles comme le verre.

C'est ainsi que les moules destinés au surmoulage d'articles en verre comprennent généralement des joints élastiques qui agissent comme élément de serrage afin d'éviter un contact direct entre le verre et le métal du moule, et qui forment au moins une partie (une paroi ou une arête) de la cavité de moulage.

Des dispositifs ayant une telle structure sont décrits notamment dans les brevets américains N° US-4 561 625, US-4 755 339, US-4 761 916.

La matière constitutive de l'élément de serrage qui se trouve en contact d'une part avec le verre, d'autre part avec la matière d'injection doit être compatible avec ladite matière, et notamment ne pas adhérer avec elle ; elle doit en outre présenter de bonnes qualités de résistance mécanique à chaud, pour résister à la température d'injection de la matière injectée.

Par ailleurs, s'il est exclu d'employer un élément de serrage qui provoquerait des contraintes inacceptables entraînant des bris de vitrage (en particulier pour les vitrages bombés en verre qui présentent inévitablement des différences de courbure d'un vitrage à l'autre d'une même série), il n'est pas non plus recommandé d'en employer un trop mou. Il est en effet nécessaire d'éviter, lors de l'injection de la matière plastique, et sous l'effet de la pression d'injection, des débordements au delà de la zone que l'on s'est fixée. Ceci explique également pourquoi des joints d'étanchéité classiques ne suffisent pas toujours pour le résultat souhaité : ils sont relativement mous pour remplir leur fonction d'étanchéité et ne peuvent par conséquent ni serrer suffisamment le vitrage pour empêcher qu'il ne se déplace, ni résister à la pression de la matière injectée.

La demande de brevet européen N° EP-127 546 propose un procédé de surmoulage de vitrages par injection de matière plastique sous pression qui utilise un joint servant à définir la limite du surmoulage, ce joint présentant une élasticité dans une direction sensiblement perpendiculaire à la surface du vitrage pour absorber les variations de forme ou de courbure du vitrage, tout en présentant une rigidité suffisante pour supporter la pression d'injection.

Selon ce document le joint a une dureté Shore A comprise entre 65 et 95 environ, gamme dans laquelle on obtient un bon compromis satisfaisant les exigences contradictoires de souplesse et de résistance mécanique. On préfère un joint en élastomère polyuréthanne qui présente une bonne résistance mécanique jusqu'à des températures de l'ordre de 230 à 290 °C

Le brevet américain N° US-5 916 600 et le document EP-A-0845340 recommandent également un joint polyuréthanne ayant une dureté Shore A de 95 dans la plupart des applications où les variations dimensionnelles des feuilles de verre sont dans des plages de valeurs normales. Mais pour des feuilles de verre ayant des degrés de variations dimensionnelles supérieures, on conseille un caoutchouc silicone ayant une dureté Shore A de 80 : le caoutchouc silicone procure un joint plus souple qui accommode mieux les écarts dimensionnels du verre. Pour des applications où la feuille de verre présente moins de variation, c'est-à-dire des configurations de courbure moins prononcée, un joint poly(téréphtalate d'éthylène) peut être utilisé, qui est moins flexible que les joints polyuréthanne.

D'une manière générale, les joints flexibles recommandés pour accommoder les séries de vitrages avec des écarts dimensionnels prononcés se laissent déformer par le verre, de sorte que la section de la cavité de moulage est différente d'un vitrage à l'autre. Ceci est un inconvénient majeur lorsqu'on attache de l'importance aux cotes fonctionnelles de l'élément surmoulé.

Le cas échéant, avec les matériaux trop flexibles qui accommodent les dimensions du verre, il peut en outre se produire une bavure par pénétration de matière entre le joint et la surface contre laquelle il est en appui, due à un manque d'étanchéité du joint flexible sous la pression d'injection.

Le brevet américain N° US-4 688 752 décrit un moule équipé de joints serrés dans les demi-moules inférieur et supérieur par des systèmes à vis, le corps du joint inférieur étant de préférence plus dur (dureté Shore A de 70) que celui du joint supérieur (dureté Shore A de 50 à 60). Ces joints dont le corps peut être en caoutchouc nitrile ou EPDM comportent avantageusement du côté de la cavité de moulage un insert en matériau de type PTFE de dureté Shore A de 90 ± 5, qui selon les auteurs améliore la durée de vie du joint, mais n'empêche pas les bavures et permet seulement de les éliminer plus facilement des surfaces du moule.

La demande de brevet européen N° EP-354 481 décrit également un moule équipé de moyens actifs de serrage ou de rappel pour plaquer les joints contre une surface du moule. Les joints élastomère en caoutchouc naturel ou synthétique ou en résines élastomères synthétiques sont de préférence en un matériau ayant un module d'Young de 10 à 500 kg/cm² pour éviter la casse du verre et assurer l'effet d'étanchéité.

Avec ce système, la force de fermeture du moule est insuffisante pour assurer l'étanchéité sur toute l'étendue de la cavité de moulage, et les moyens presseurs additionnels sont utilisés pour ajuster la compression du joint en tout point du moule pour atteindre l'étanchéité. Cet ajustement nécessite un contrôle du module et de la direction de la force de pression appliquée. Ces moyens de contrôle de la compression du joint apparaissent comme indispensables quand le module d'Young du matériau n'est pas faible.

Il va sans dire que de telles structures de moule sont coûteuses tant du point de vue de l'investissement que de la maintenance.

Il apparaît donc souhaitable d'améliorer les techniques de surmoulage afin d'atteindre une meilleure reproductibilité des résultats, en particulier en ce qui concerne les cotes fonctionnelles de l'élément surmoulé.

Ce besoin est d'autant plus important pour des joints rapportés en moules, qui se présentent initialement sous forme de bande profilée et qui sont montés dans le moule par simple Insertion dans une gorge de réception, sans dispositif de contrôle et réglage du degré de mise en compression du joint tel que décrit dans US-4 688 752 et EP-354 481.

Le but de la présente Invention est ainsi de fournir un procédé de surmoulage amélioré permettant d'atteindre une bonne reproductibilité des résultats, de préférence de garantir le respect des cotes fonctionnelles pour l'élément surmoulé, avec un équipement aussi simple que possible.

A cet égard, l'invention a pour objet un procédé de surmoulage de vitrages selon la revendication 1. Le module d'Young est mesuré selon la norme ISO 727-1.

Alors que la plupart des références antérieures enseignent de choisir un matériau en fonction de sa dureté, il est apparu que la rigidité (exprimée par le module d'Young) est un paramètre essentiel au bon fonctionnement du joint. Or, deux matériaux de même dureté peuvent avoir des modules d'Young complètement différents.

Plus particulièrement, un joint relativement rigide a tendance à résister à une déformation imposée par un corps qui s'appuie sur lui : dans le cas du verre, les inventeurs ont identifié une plage de rigidité où un joint rapporté procure l'étanchéité souhaitée sous l'action de la force de fermeture du moule tout en corrigeant les défauts de planéité ou de courbure de la plaque de verre, c'est-à-dire que le joint non seulement n'est pas déformé mais au contraire impose une déformation à la plaque de verre qui se rapproche des cotes nominales de la matrice du moule, et ce sans entraîner de casse de la plaque de verre.

De façon inattendue, le choix d'un matériau rigide a en outre une influence conséquente sur l'étanchéité procurée par le joint rapporté. D'après les investigations des inventeurs, il semblerait qu'un effet avantageux s'exerce lors de la mise en place du joint rapporté dans la gorge usinée dans l'élément de moule : au cours de cette étape réalisée à la main, l'opérateur a une tendance Inévitable à étirer le joint dans le sens longitudinal provoquant localement une variation de section du joint. Les déformations transversales du joint étant d'autant plus importantes que le module d'Young est faible (matériaux moins rigides), on minimise la variation de section avec un joint de module élevé. On obtient ainsi une section de joint plus constante le long du parcours de la gorge dans le moule. La section du joint dans le moule est donc moins sensible aux écarts de pose par un même opérateur ou par des opérateurs différents, grâce à quoi on garantit la formation d'un joint étanche de façon répétable.

Une rigidité minimale de l'ordre de 30 MPa confère les propriétés de joint selon l'invention. Avantageusement, le module d'Young est d'au moins 40 MPa, de préférence au moins 50 MPa, tout particulièrement au moins 60 MPa.

Une rigidité trop élevée pose un double problème : elle entraîne la casse du vitrage dans une proportion inacceptable pour le rendement de l'opération de surmoulage, et elle diminue la conformabilité du joint à l'insertion dans la gorge, plus particulièrement dans une portion non rectiligne, dans les arrondis notamment, entraînant des défauts de qualité des vitrages non cassés.

C'est pourquoi le module d'Young du joint est limité à 400 MPa, de préférence il est inférieur ou égal à 300 MPa, avantageusement de l'ordre de 40 à 200 MPa pour une pression d'injection faible en moule (2 à 10 bars), voire plus, notamment supérieur à 220 - 230 MPa, par exemple 250 MPa pour une pression d'injection élevée en moule (de l'ordre de 300 bars).

L'invention consiste en fait à sélectionner une plage de rigidité du matériau de joint dans laquelle les défauts de galbe du verre sont écrasés en grande partie mais pas repassés totalement : les défauts courants (faible écart par rapport aux cotes théoriques) sont effacés, alors que les défauts plus critiques (écarts plus importants par rapport aux cotes théoriques) sont gommés en partie et transformés en défauts courants ou moins critiques.

Par la suite, on définit un défaut de planéité ou de galbe du vitrage comme la variation de la cote en altitude d'un point du vitrage par rapport à la cote théorique (définition des surfaces en CAO) sur une distance donnée dans toutes les directions du plan du vitrage : il s'agit donc d'un écart de pente, exprimé en %. De façon générale, un défaut de courbure de 0,5% est considéré comme courant et toléré au stade de la fabrication.

A titre d'illustration non limitative, on peut indiquer qu'avec un joint constitué d'un matériau ayant un module d'Young de 30 à 200 MPa , les défauts de courbure des vitrages tolérés au stade de la fabrication (c'est-à-dire présentant un écart de pente d'au plus 0,5 % par rapport aux dimensions théoriques ou cote nominale) sont repassés pour l'essentiel par le joint dans le moule sans que cela n'entraîne de casse du vitrage. Le joint donne ainsi la forme nécessaire au vitrage.

Une rigidité plus élevée, de l'ordre de 200 à 400 MPa qui peut être souhaitable pour une pression d'injection élevée, permet généralement de repasser en grande partie les défauts plus importants (écart de pente d'environ 1 % par rapport aux dimensions théoriques) sans casse du vitrage.

Un autre paramètre qui se révèle avantageux pour l'efficacité du joint d'étanchéité dans le procédé de surmoulage selon l'invention est la contrainte à la rupture du matériau. Il semblerait que ce paramètre qui caractérise (parmi d'autres) la résistance mécanique du matériau ait une influence sur la durabilité du joint pendant un cycle de fonctionnement du moule.

Ainsi un joint dont la contrainte à la rupture (mesurée selon norme ISO 527-1) est d'au moins 10 MPa peut être utilisé au moins deux fois plus longtemps qu'un joint classique avant que n'apparaissent des défauts de surmoulage.

Les matériaux susceptibles d'être utilisés pour constituer le joint selon l'invention peuvent être choisis suivant leurs propriétés mécaniques énoncées précédemment dans les familles d'élastomères suivantes : polyoléfines telles que polyéthylène, polypropylène, notamment halogénées telles que poly(tétrafluoroéthylène), polymères vinyliques tels que poly(chlorure de vinyle), poly(fluorure de vinylidène), poly(éthylène-acétate de vinyle), polyamides, résines ionomères, élastomères thermoplastiques (TPE), oléfines thermoplastiques (TPO) polyéthersulfone (PES).

Par élastomères thermoplastiques TPE, on entend des mélanges ou alliages de thermoplastique et d'élastomère, où le thermoplastique peut être notamment un caoutchouc naturel ou synthétique hydrocarboné, éventuellement halogéné, de préférence de type copolymère éthylène-propylène-diène (EPDM).

Par oléfine thermoplastique TPO, on entend les ensembles constitués de polyoléfines (PP,PE) avec des élastomères non vulcanisés.

Parmi ces matériaux, les TPE sont particulièrement préférés car ils manifestent une bonne résistance chimique aux agents de démoulage utilisés dans certains procédés de surmoulage.

Ainsi, ils conservent un niveau suffisant de leurs propriétés mécaniques (module, contrainte à la rupture) même après une exposition prolongée aux agents de démoulage en question.

La forme du joint rapporté est bien sûr adaptée à chaque configuration de surmoulage particulière. La section du joint peut ainsi être polygonale ou curviligne, le cas échéant avec alternance de concavité, par exemple avec une rainure longitudinale du côté du fond de la gorge ou au contraire du côté en contact avec le vitrage. Le joint peut être plein, tubulaire ou en matériau cellulaire (mousse).

Dans une réalisation particulière, le joint comporte une portion en saillie latérale par rapport au corps du joint, reçue dans un logement adjacent à la gorge, qui forme une surface d'appui pour le vitrage. Ce type de forme est connu sous le nom de joint à lèvre ou joint sifflet.

La gorge de réception peut comprendre sur ses parois verticales des saillies qui s'engagent dans le matériau du joint, le cas échéant dans des rainures de forme correspondante, afin d'améliorer la retenue du joint dans la gorge.

Le procédé selon l'invention s'applique en particulier au surmoulage de matière réactive comme du polyuréthanne en injection réactive (RIM) ou du polyuréthanne monocomposant, ou de matière thermoplastique comme du polychlorure de vinyle.

Le procédé selon l'invention s'applique également en particulier lorsque la pression en moule est de l'ordre de 2 à 400 bars.

Il s'applique avantageusement au surmoulage d'élément en plastique sur un vitrage en verre trempé ou durci, bombé, feuilleté dans lequel au moins une feuille de verre est éventuellement traitée thermiquement (durcie, recuite, trempée).

Avantageusement également, il n'est pas besoin de prévoir des moyens actifs de serrage ou de rappel du joint d'étanchéité selon l'invention, comme dans le cas du joint présenté dans la demande de brevet européen N° EP 354 481.

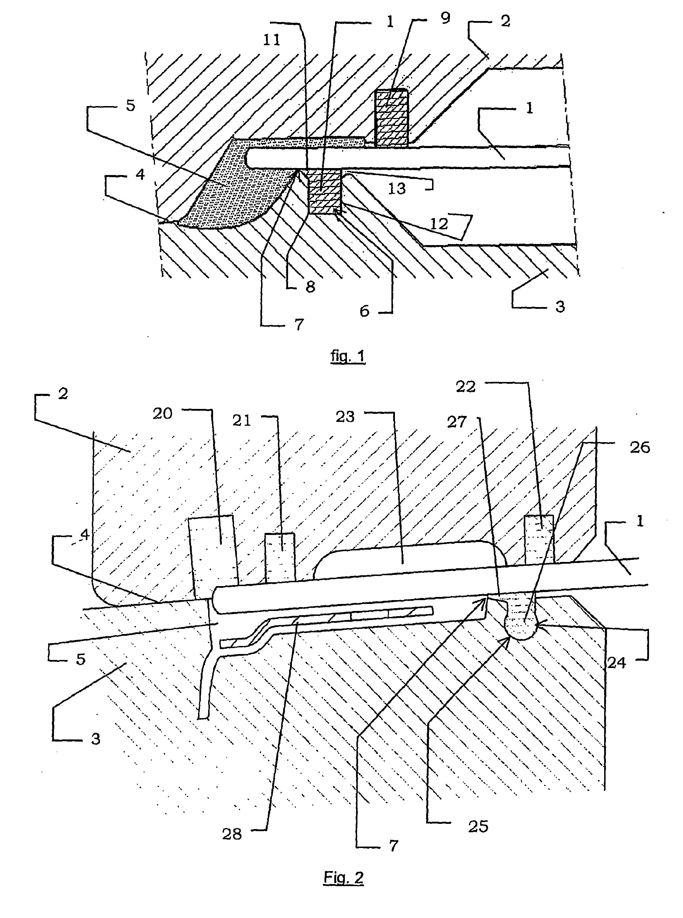

D'autres caractéristiques et avantages de l'invention ressortiront de la description détaillée qui va suivre faite en regard des dessins annexés dans lesquels les figures 1 et 2 représentent chacune une vue partielle en coupe d'un moule mettant en oeuvre le procédé selon l'invention.

Dans le dispositif illustré à la figure 1, le vitrage 1 est maintenu entre deux plateaux métalliques 2 et 3, notamment en acier, formant un moule et délimitant un plan de joint 4 et une cavité de moulage 5.

Un joint d'étanchéité inférieur 6 destiné à limiter l'injection de la matière de surmoulage présentant une arête 7 réalisant une limite de surmoulage de la cavité de moulage, est mis en place dans un logement en forme de gorge 8 prévu à cet effet sur le plateau inférieur 3 du moule. La partie du plateau inférieur 3 du moule correspondant à la partie non surmoulée du vitrage n'est pas au contact du vitrage ; il subsiste entre la face inférieure de celui-ci et le plateau du moule un espace suffisant défini par la hauteur initiale du joint 6 et la force de fermeture du moule.

La partie du plateau supérieur 2 du moule correspondant à la partie non surmoulée du vitrage est elle-même en contact avec le vitrage par l'intermédiaire d'un autre joint , le joint supérieur 9, de préférence de même nature que le joint inférieur 6.

Le moule comprend des moyens d'injection de matière non représentés incluant au moins un orifice d'injection et des moyens d'alimentation en matière correspondant. Il peut comprendre des moyens additionnels de chauffage.

Le dispositif est adapté pour l'injection de toutes sortes de matières permettant des compositions, des couleurs, ou des duretés différentes et peuvent être injectées, suivant les propriétés souhaitées dans les applications envisagées.

Il peut s'agir notamment de matières thermoplastiques ou thermodurcissables injectées à l'état plastique et qui prennent leur forme définitive par refroidissement et/ou réticulation, ou de matières réactives injectées à l'état fluide ou visqueux qui polymérisent et/ou réticulent dans le moule.

Ainsi, on utilise couramment pour l'injection, du polystyrène, polyéthylène basse densité et haute densité, polypropylène, des polyamides, du polychlorure de vinyle, polyuréthane, etc ... Ces matières de base peuvent en outre être renforcées de fibres notamment de verre, et/ou de charges autres.

Selon la matière injectée, il peut être préférable de choisir pour le joint une matière différente, afin d'éviter les risques d'adhérence du joint à la matière injectée. Alternativement, le joint peut être traité pour limiter cette adhérence.

Dans le cas notamment d'encapsulation en PU-RIM, il est également souhaitable de traiter toute la cavité de moulage avec un agent de démoulage qui empêche la matière injectée d'adhérer à toutes les surfaces adjacentes. Le vitrage 1 représenté partiellement peut être un vitrage monolithique plan ou bombé, notamment trempé, mais l'invention peut également s'appliquer à des vitrages composites (associant au moins une feuille de verre à une feuille de matière plastique translucide ou non) ou feuilletés (associant au moins une feuille de verre à au moins une feuille de verre organique ou minéral par l'intermédiaire d'une couche intercalaire) ou durcis.

Le joint 6 se présente sous forme d'une bande profilée qui peut être fabriquée par extrusion, par injection ou par usinage, avec un corps 10 approximativement parallélépipédique et une portion 11 en saillie latérale par rapport au corps du joint réalisant une lèvre qui définit une surface d'appui pour le vitrage 1 et qui est reçue dans une surface correspondante du moule adjacente à la gorge 8.

Dans le mode de réalisation représenté, le corps 10 du joint a une largeur légèrement supérieure à la largeur de la gorge 8, de sorte que les faces verticales du joint forment deux surfaces de frottement contre les parois verticales 12 de la gorge.

Dans une variante non représentée, le joint peut être tel que la largeur de la base du joint à l'état non monté est supérieure à la largeur de la gorge 8 grâce à deux renflements de part et d'autre de la base du joint. Les deux renflements forment des surfaces de frottement contre les parois verticales 11 de la gorge 8 dont la fonction est d'assurer le maintien en place du joint monté.

Pour faciliter la mise en place du joint dans la gorge ou ultérieurement la fermeture du moule, il peut comporter une rainure longitudinale permettant la déformation nécessaire à l'insertion du joint. Alternativement, le joint peut comporter une base tubulaire ou de structure cellulaire permettant cette déformation.

Avantageusement, le joint 6 a une hauteur légèrement supérieure à la hauteur de la gorge 8 de façon à plaquer correctement le joint sur le verre à la fermeture du moule, en limitant les contraintes générées sur verre qui autrement seraient source de casse.

Cette différence de hauteur est de préférence suffisante pour solliciter assez fortement le joint et transmettre au vitrage une force de réaction suffisante pour déformer légèrement le verre en cas de défaut de galbe. La rigidité du joint 6 est choisie selon l'invention pour que le joint écrase suffisamment les défauts du verre sans pour autant générer de contraintes entraînant la casse. Cette différence de hauteur peut également être calibrée pour absorber d'éventuelles variations d'épaisseur du verre.

A titre d'illustration, le joint 6 peut dépasser de la gorge 8 d'une épaisseur de l'ordre de 0,5 à 3 mm, par exemple ici de 2 mm dans le moule ouvert. Lorsqu'on ferme le moule, le joint 6 a la liberté de s'écraser (grâce à la présence de zones d'expansion non remplies telles qu'en 13) d'environ 1 mm de sorte que le vitrage 1 est encore empêché d'être en contact avec la surface de la partie de moule inférieure 3.

Lorsque l'on injecte la matière plastique dans la cavité 5, le joint 6 procure un contact étanche au niveau de l'arête intérieure 7 de ladite cavité, et empêche toute pénétration de matière vers la partie centrale du vitrage.

Ce dispositif est utilisé pour réaliser les exemples suivants :

### Exemple 1

Le vitrage 1 étant un pare-brise automobile bombé et feuilleté, on réalise un surmoulage de Polyuréthane RIM. Le joint 6 est en TPE de la marque SANTOPRENE de la Société Advanced Elastomers Systems, et qui est à base de caoutchouc EPDM (éthylène - propylène - diène) et de thermoplastique. Il a un module d'Young de 66 MPa et une contrainte à la rupture de 15 MPa.

A cet effet, on applique sur les surfaces de la cavité de moulage un agent de démoulage à base de paraffine (par exemple de la société BOMIX).

On injecte dans le moule fermé une composition de Polyols et d'Isocyanates à une température de 45°C et sous une pression de 10 bars.

Après démoulage, le pare-brise intact est muni d'un cadre périphérique dont les arêtes correspondent parfaitement à la section théorique du moule. On n'observe pas de bavure ni sur le vitrage, ni sur les surfaces du moule.

Le même joint peut être utilisé pour la fabrication de plus de 1000 articles surmoulés.

Au cours de cette série de fabrication, les vitrages à traiter présentent initialement des écarts dimensionnels par rapport à la cote théorique allant jusqu'à 1 % d'écart de pente.

D'une part aucune casse n'a été observée et d'autre part les produits surmoulés se révèlent avoir des dimensions proches de la cote théorique (mesurables sur les sections de joints, sur toute la périphérie du vitrage), preuve que les éventuels défauts ont été repassés au cours de l'opération et que le vitrage présente alors la forme nécessaire.

### Exemple comparatif 1

On procède de la même manière avec un joint 6 en élastomère silicone, utilisé couramment, caractérisé par un module d'Young de 6 MPa et une contrainte à la rupture de 8 MPa. Dans ces domaines de modules, les inventeurs n'ont pas détecté une quelconque influence de la dureté sur les résultats qui suivent (niveaux de duretés du joint testés entre 50 et 90 ShA).

Le surmoulage est réalisé sans casse de vitrage avec obtention de profils surmoulés de bonne qualité.

Cependant, les écarts dimensionnels de vitrage présentant des défauts de galbe ou d'épaisseur ne sont pas rattrapés lorsqu'ils correspondent à des écarts supérieurs à 0,125 % par rapport à la cote théorique, cet écart étant largement inférieur à la taille d'un défaut couramment toléré (de l'ordre de 0,5 %).

En outre, la durée de vie du joint est bien inférieure car après moins de 100 pièces surmoulées, le cadre surmoulé ne présente plus un contour conforme à la section théorique (défauts, bavures).

Le remplacement 5 à 10 fois plus fréquent du joint dans le procédé de fabrication pénalise la cadence et le coût de la campagne de fabrication, mais aussi l'homogénéité du lot fabriqué : en effet, à chaque nouvelle pose de joint, la surface du moule n'est pas exactement conforme ni au modèle théorique, ni à la surface de la série précédente.

Ceci s'explique d'une part par les faibles propriétés mécaniques initiales du joint en silicone, en particulier la contrainte à la rupture, mais aussi par la dégradation liée à l'exposition aux agents de démoulage lorsqu'ils sont utilisés. Ainsi, on vérifie que le silicone voit son module d'Young et sa contrainte à la rupture chuter dramatiquement respectivement à 3 MPa et à 5 MPa après 1 heure d'immersion complète dans un démoulant.

Au contraire, le TPE de l'exemple 1 subit une perte faible avec une contrainte à la rupture de 13 MPa et un module d'Young de 55 MPa après 1 heure d'immersion complète dans un démoulant.

### Exemple comparatif 2

Dans cet exemple, le joint 6 est en EPDM dont le module d'Young est de 3 MPa et la contrainte à la rupture est 9 MPa. Dans ce domaine de modules, les inventeurs n'ont pas détecté une quelconque influence de la dureté sur les résultats qui suivent (niveaux de duretés du joint testés entre 50 et 90 ShA).

Les observations sont similaires à celles de l'exemple comparatif 1, mais avec une efficacité insuffisante dans le repassage des défauts : seulement 70 % des défauts mineurs (< 0,125 % d'écart).

Le test de résistance au démoulant montre que le module d'Young est conservé, mais que la contrainte à la rupture chute à 6 MPa après 1 heure d'immersion complète dans le démoulant.

### Exemple 2

Lorsque la même fabrication de vitrage surmoulée est réalisée avec un joint encore plus rigide qu'à l'exemple 1, avec un module d'Young de 250 MPa, ce joint permet de repasser tous les défauts même les plus critiques ayant jusqu'à 1,4 % d'écart au théorique.

### Exemple 3

Dans cet exemple, on réalise le surmoulage d'une vitre de custode trempée avec du PVC (poly(chlorure de vinyle)) de marque Sunprène KB65 FB, de la société Resinoplast (ATOFINA) à une température de 190°C et sous une pression mesurée en moule de 200 bars.

On utilise un joint en TPE rigide ayant un module d'Young de 200 MPa et une contrainte à la rupture de l'ordre de 30 MPa.

Le choix de ces caractéristiques mécaniques garantit le maintien de l'étanchéité à la forte pression d'injection empêchant la formation de bavure de matière plastique hors de la cavité de moulage.

Elle permet également le repassage des défauts dimensionnels du verre les plus courants (0,5 % d'écart au théorique) sans casse de verre.

Le dispositif illustré à la figure 2 est une variante dans laquelle, le demi-moule supérieur est équipé de plusieurs joints qui peuvent tous ou en partie seulement être choisis selon les critères de l'invention. En particulier, deux joints d'étanchéité classiques 21, 22 sont pourvus au contact de la surface supérieure du vitrage 1 de part et d'autre d'un anneau à vide 23 dont la fonction est de maintenir le vitrage en position sur la partie de moule supérieure.

Sur cette figure 2 les éléments identiques à ceux de la figure 1 portent la même référence que ceux de la figure 1.

Un joint 20, selon l'invention, est prévu au plan de joint 4 entre les deux demi-moules, qui a d'une part une fonction d'étanchéité au plan de joint, mais assure aussi la définition d'une cote fonctionnelle entre la surface du verre et la limite d'encapsulation. Il a une section et des caractéristiques appropriées pour définir la position du vitrage par rapport à la cavité de moulage. C'est cette cote fonctionnelle qui garantit le montage ultérieur du vitrage.

Un joint d'étanchéité 24 destiné à limiter l'injection de la matière de surmoulage à une arête 7 de la cavité de moulage, est mis en place dans un logement en forme de gorge 25 de section partiellement cylindrique prévu à cet effet sur le plateau inférieur 3 du moule.

Le joint 24 est composé d'un corps partiellement cylindrique 26 de forme à contre-dépouille et de section adaptées pour être inséré plus ou moins en force dans la gorge 25 (de section légèrement inférieure à celle du corps), et d'une portion latérale saillante comprenant une lèvre 27 qui définit une surface d'appui pour le vitrage 1 et qui est reçue dans une surface correspondante du moule adjacente à la gorge 25.

La cavité de moulage est également équipée de moyens non représentés pour maintenir un élément d'insert, notamment métallique 28, qui sera incorporé dans la matière plastique surmoulée.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de surmoulage d'un vitrage (1), notamment de vitrages bombés pour véhicules automobiles, par injection de matière plastique ou réactive, sur au moins une partie de la surface notamment périphérique du vitrage, dans lequel
- on place un vitrage dans un moule comprenant au moins deux éléments (2, 3) de moule délimitant une cavité de moulage (5), au moins un joint d'étanchéité (6) définissant une limite de surmoulage,
- on ferme le moule et on injecte la matière, et
- après durcissement ou polymérisation, on ouvre le moule et on retire le vitrage surmoulé,
ledit joint d'étanchéité (6) étant une bande profilée insérée dans une gorge (8) usinée dans l'élément du moule (3) et maintenue par contact avec frottement et/ou par engagement de formes complémentaires,
**caractérisé en ce que** ledit joint (6) a un module d'Young mesuré selon la norme ISO 727-1 :
a- de 40 à 200 MPa pour une pression d'injection faible en moule de 2 à 10 bars
b- de 200 MPa pour une pression mesurée en moule de 200 bars, le joint étant en TPE rigide et ayant une contrainte à la rupture selon la norme ISO 527-1 de l'ordre de 30 MPa
c- de 220 à 400 MPa pour une pression d'injection élevée en moule de 300 bars.

2. Procédé selon la revendication 1 dans les cas a ou c, **caractérisé en ce que** le joint (6) est en un matériau choisi parmi les familles d'élastomères suivantes : polyoléfines telles que polyéthylène, polypropylène, notamment halogénées telles que poly(tétrafluoroéthylène), polymères vinyliques tels que poly(chlorure de vinyle), poly(fluorure de vinylidène), poly(éthylène-acétate de vinyle), polyamides, résines ionomères, élastomères thermoplastiques TPE, oléfines thermoplastiques TPO, polyéthersulfone PES.

3. Procédé selon la revendication 2, **caractérisé en ce que** le joint (6) est en TPE à base de thermoplastique et d'EPDM.

4. Procédé selon l'une quelconque des revendications précédentes, **caractérisé en ce que** la section du joint (6) est polygonale ou curviligne, le cas échéant avec alternance de concavité.

5. Procédé selon l'une quelconque des revendications précédentes, **caractérisé en ce que** le joint (6) présente une rainure longitudinale.

6. Procédé selon l'une quelconque des revendications précédentes, **caractérisé en ce que** le joint (6) comporte une portion (11) en saillie latérale par rapport au corps du joint du type joint à lèvre ou joint sifflet.

7. Procédé selon l'une quelconque des revendications précédentes, **caractérisé en ce que** la matière injectée est une matière réactive comme du polyuréthanne en injection réactive RIM ou du polyuréthanne monocomposant, ou de matière thermoplastique comme du polychlorure de vinyle.

8. Procédé selon l'une quelconque des revendications précédentes, **caractérisé en ce que** le vitrage (1) est en verre trempé ou durci, bombé, feuilleté dans lequel au moins une feuille de verre est éventuellement traitée thermiquement.

## Claims

1. A process for overmolding a window (1), especially curved windows for motor vehicles, by injecting a plastic or reactive material, onto at least one part of the surface, especially the peripheral surface, of the window, in which:
- a window is placed in a mold comprising at least two mold elements (2, 3) that define a molding cavity (5), at least one seal (6) defining an overmolding boundary,
- the mold is closed and the material is injected and
- after curing or polymerization, the mold is opened and the overmolded window removed,
said seal (6) being a profiled strip inserted into a groove (8) machined in the mold element (3) and held against, by frictional contact and/or by engagement of complementary shapes, **characterized in that** said seal (6) has a Young's modulus measured according to the ISO 727-1 standard:
a- from 40 to 200 MPa for a low pressure in-mold injection of 2 to 10 bars
b- of 200 MPa under an in-mold pressure of 200 bar, the seal being made of rigid TPE and having a tensile strength according to the ISO 727-1 standard of around 30 MPa
c- from 220 to 400 MPa for a high in-mold injection pressure of 300 bar.

2. The process as claimed in claim 1 in case b or c, **characterized in that** the seal (6) is made of a material chosen from the following families of elastomers: polyolefins, such as polyethylene and polypropylene, especially halogenated polyolefins such as polytetrafluorethylene; vinyl polymers, such as polyvinyl chloride and polyvinylidene fluoride; ethylene/vinyl acetate copolymers; polyamides; ionomer resins; thermoplastic elastomers TPEs; thermoplastic olefins TPOs; and polyethersulfone PES.

3. The process as claimed in claim 2, **characterized in that** the seal (6) is made of a TPE based on a thermoplastic and on EPDM.

4. The process as claimed in any one of the preceding claims, **characterized in that** the cross section of the seal (6) is polygonal or curvilinear, where appropriate with an alternation of concavity.

5. The process as claimed in any one of the preceding claims, **characterized in that** the seal (6) has a longitudinal slot.

6. The process as claimed in any one of the preceding claims, **characterized in that** the seal (6) has a portion (11) projecting laterally with respect to the body of the seal of the type of a lip seal or a scarf seal.

7. The process as claimed in any one of the preceding claims, **characterized in that** the injected material is a reactive material, such as a reactive injection molding RIM polyurethane or a one-component polyurethane, or a thermoplastic such as polyvinyl chloride.

8. The process as claimed in any one of the preceding claims, **characterized in that** the window (1) is made of laminated, curved, toughened or hardened glass in which at least one sheet of glass is optionally heat-treated.

## Patentansprüche

1. Verfahren zum Überformen eines Glases (1), insbesondere eines gebogenen Glases für Kraftfahrzeuge, durch Spritzgießen oder Reaktionsspritzgießen eines Kunststoffs auf wenigstens einen Teil der speziell umfänglichen Oberfläche des Glases, in welchem:
- ein Glas in einem Werkzeug, das mindestens zwei Werkzeugelemente (2, 3) umfasst, die einen Werkzeughohlraum (5) begrenzen, wobei wenigstens eine Dichtung (6) eine Begrenzung für die Überformung bildet, angeordnet,
- das Werkzeug geschlossen, der Kunststoff eingespritzt und
- nach Aushärtung oder Polymerisation das Werkzeug geöffnet und das überformte Glas entnommen wird,
wobei die Dichtung (6) ein Profilband ist, das in eine in dem Werkzeugelement (3) maschinell angebrachte Auskehlung (8) eingelegt worden ist und durch Kontakt mit Reibung und/oder durch den Eingriff komplementärer Formen festgehalten wird, **dadurch gekennzeichnet, dass** die Dichtung (6) einen gemäß der Norm ISO 727-1 gemessenen Elastizitätsmodul von:
a) 40 bis 200 MPa bei einem niedrigen Spritzdruck von 2 bis 10 bar im Werkzeug,
b) 200 MPa bei einem im Werkzeug gemessenen Druck von 200 bar, wobei die Dichtung aus steifem TPE besteht und gemäß der Norm ISO 527-1 eine Bruchspannung von etwa 30 MPa besitzt, und
c) 220 bis 400 MPa bei einem hohen Spritzdruck von 300 bar im Werkzeug
besitzt.

2. Verfahren nach Anspruch 1 für den Fall a) oder c), **dadurch gekennzeichnet, dass** die Dichtung (6) aus einem Material besteht, das aus folgenden Elastomerfamilien ausgewählt ist: Polyolefine wie Polyethylen und Polypropylen, insbesondere halogenierte wie Polytetrafluorethylen, Vinylpolymere wie Polyvinylchlorid, Polyvinylidenfluorid und Polyethylenvinylacetat, Polyamide, Ionomerharze, thermoplastische Elastomere, TPE, thermoplastische Olefine, TPO, und Polyethersulfon, PES.

3. Verfahren nach Anspruch 2, **dadurch gekennzeichnet, dass** die Dichtung (6) aus TPE auf der Basis von einem Thermoplast und EPDM besteht.

4. Verfahren nach einem der vorhergehenden Ansprüche, **dadurch gekennzeichnet, dass** der Querschnitt der Dichtung (6) polygonal oder gekrümmt ist, gegebenenfalls mit einer alternierenden Konkavität.

5. Verfahren nach einem der vorhergehenden Ansprüche, **dadurch gekennzeichnet, dass** die Dichtung (6) eine Längsnut aufweist.

6. Verfahren nach einem der vorhergehenden Ansprüche, **dadurch gekennzeichnet, dass** die Dichtung (6) einen vorstehenden Teil (11) umfasst, der sich in Bezug auf den Körper der Dichtung vom Typ Lippen- oder Schrägdichtung seitlich befindet.

7. Verfahren nach einem der vorhergehenden Ansprüche, **dadurch gekennzeichnet, dass** das eingespritzte Material ein reaktives Material wie Polyurethan für den Reaktionsspritzguss, RIM, bzw. Einkomponentenpolyurethan oder ein Thermoplast wie Polyvinylchlorid ist.

8. Verfahren nach einem der vorhergehenden Ansprüche, **dadurch gekennzeichnet, dass** das Glas (1) ein vorgespanntes bzw. ausgehärtetes, gebogenes Glas oder ein Verbundglas, in welchem mindestens eine Glasscheibe gegebenenfalls thermisch behandelt worden ist, ist.
